# EUROPEAN PATENT APPLICATION

(11) **EP 1 975 766 A2**
(43) Date of publication of application: **01.10.2008**
(21) Application number: 08102932.4
(22) Date of filing: 26.03.2008
(51) Int. Cl.: G06F 3/045

(54) **Touch panel**

(30) Priority: 30.03.2007 JP 2007093493; 21.06.2007 JP 2007164246; 27.11.2007 JP 2007306418
(71) Applicant: Fujitsu Component Limited, Tokyo 141-8630 (JP)
(72) Inventor: Endo, Michiko c/o Fujitsu Component Limited, Shinagawa-ku Tokyo 141-8630 (JP); Yamamoto, Takashi c/o Fujitsu Component Limited, Shinagawa-ku Tokyo 141-8630 (JP)
(74) Representative: Skone James, Robert Edmund

(57) **Abstract**

A touch panel including a fixation side substrate (11) and an operation side substrate (12) disposed in opposition and adhered to each other, having a fixation side conductive film and an operation side conductive film respectively formed on opposing faces of the fixation side substrate and the operation side substrate, and being capable of detecting any contact point on the fixation side conductive film and the operation side conductive film as a 2-dimensional coordinate, wherein a bending section (16) is formed between one end and the other end thereof, and wherein two input operation regions (14,15) are defined and formed on both sides of the bending section.

## Description

### 1. Field of the Invention

The present invention relates to a touch panel having a fixation side substrate and an operation side substrate disposed in opposition and adhered to each other, and being capable of detecting any contact point as a 2-dimensional coordinate in input operation areas being inside of a frame.

### 2. Description of the Related Art

In recent years, the application of touch panels has become more and more widespread, and the touch panels have been increasingly mounted on portable information apparatuses. In a portable information apparatus such as a mobile phone, a small size game machine, and the like, it is naturally desirable to have an apparatus which is of light weight and thin profile, and which has the structure capable of withstanding dropping impact without failure. Therefore, in place of conventional touch panels based on film-glass structure, touch panels based on plastic material such as FFP, FF, FP have become more widely used.

On the other hand, in mobile phones or miniature game machines, a folding type structure has become more and more widely adopted. Many of conventional machines adopting the folding type structure have two screens in which one surface is used as a display screen and the other surface is used as an operating panel having key switches and pointing devices arranged thereon. When a touch panel is applied to such an apparatus, the touch panel has been provided only on one of the two surfaces, that is, the display screen. Recently, however, an apparatus in which both surfaces have the function of display screen has emerged, and its demand has been increasing. In such an apparatus, an attempt has been made to apply the touch panel to both display screens.

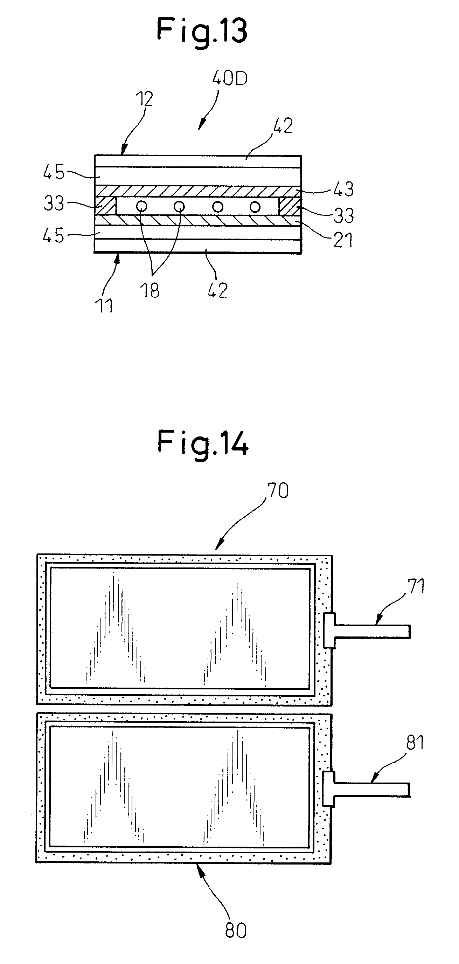

In order to apply the touch panel to an apparatus having two display screens, as shown in Fig. 14, two touch panels 70, 80 are required. Thus, there is a problem that two sets of flexible circuit bodies 71, 81 for the two touch panels are required, and structure of the two touch panels becomes unavoidably complicated. Therefore, the present applicant has been searching for a one-sheet type touch panel that is capable of being folded in two and forming two screens of input operation areas.

Although not directly relevant to the present invention, Japanese Patent Publication H10-340151 discloses a folding type food ordering terminal having a plurality of switch sheets. In this food ordering terminal, a binding ring is fixed to a substrate, and a plurality of switch sheets are bound by the rings in the form of a binder type book. Each switch sheet consists of five resin sheets adhered together. The switch sheets have circuit bodies having switches formed therein.

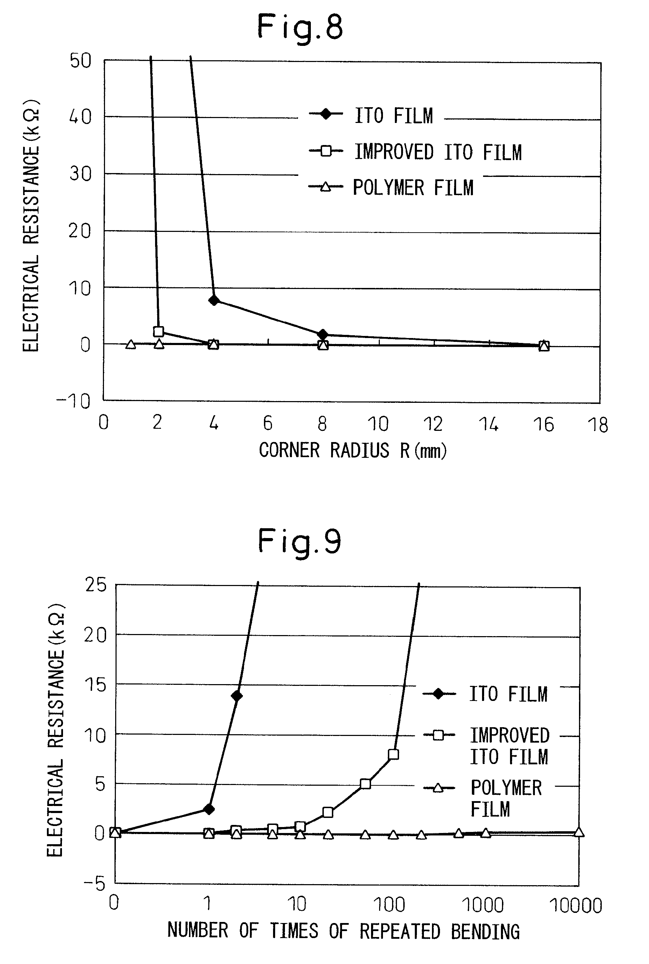

In conventional resistive film type touch panel, an ITO film is formed as a conductive film. Since the ITO film is rigid and fragile like a thin glass plate, there is a problem that, when the ITO film is bent with a small radius of curvature R, cracks are produced and the conductive property of the film is impaired. That is, there is a problem that the ITO film is damaged due to the stress exerted on the bent portion of the ITO film. For example, it has been confirmed that, if ITO film is folded with corner radius R 1.0, change of resistance is produced after several times or several tens of times of repeated folding and unfolding(see Fig. 9).

### Summary of the Invention

In view of above-described problem, it is an object of the present invention to provide a touch panel which has excellent bending property and high durability and is capable of maintaining reliable electrical connection for a long period.

In order to attain the above object, in accordance with an aspect of the present invention, there is provided a touch panel comprising a fixation side substrate and an operation side substrate disposed in opposition and adhered to each other, having a fixation side conductive film and an operation side conductive film formed on the fixation side substrate and the operation side substrate, respectively, and being capable of detecting any contact point on the fixation side conductive film and the operation side conductive film as 2-dimensional coordinates, wherein a bending section that is capable of being bent is formed between one end and the other end, and wherein two input operation regions are defined and formed on both sides of the bending section.

In accordance with above construction, since the bending section that defines two input operation regions is capable of bending, even if one end portion of the touch panel is bent repeatedly in the direction towards or away from the other end of the touch panel with the bending section as a supporting point, concentration of stress in the bending section can be avoided during the long term use of the touch panel. Thus, the touch panel formed integrally as one unit can take two states, that is, an open state and a closed state. In this way, a touch panel which has excellent bending property and high durability and which is capable of maintaining good reliability of electrical connection for a long period can be provided.

In the touch panel as described above, the fixation side conductive film and the operation side conductive film can be formed from conductive polymer. By replacing the ITO film with a conductive polymer in the fixation side conductive film and in the operation side conductive film, the stress acting upon the bending section, when the touch panel is repeatedly bent with the bending section as a supporting point, can be relaxed and the damage to the conductive film can be mitigated so that remarkable improvement in the durability (writing durability) of the touch panel can be obtained.

In the touch panel as described above, it is also possible to use an ITO film as the fixation side conductive film and a conductive polymer as the operation side conductive film. Although the ITO film is a rigid and fragile material, by removing the ITO film from the bending section by means of etching or the like, it is possible to bend the touch panel with the bending section as a supporting point.

In the touch panel as described above, it is also possible to form the fixation side substrate from a glass and to separate the touch panel into two portions at the bending section and to form the operation side substrate integrally with transparent film in one unit. Since the two input operation regions are formed on the basis of glass, a touch panel capable of being bent can be provided without compromising the strength (flexibility) of the touch panel.

In the touch panel as described above, it is also possible to form an insulating layer in the bending section. With such construction, the risk of short circuit occurring at the bending section can be eliminated.

In the touch panel as described above, a multiplicity of dot spacers which have narrower separation than a space between dot spacers formed in the two operating regions can be formed in the bending section. With such construction, uniformity of gap between a pair of opposing conductive films can be maintained.

In the touch panel as described above, a color tone correction film can be formed for correcting the blue color of the conductive polymer material. With such color tone correction film, the color of the liquid crystal display or the like can be faithfully reproduced and a high quality image can be thereby obtained.

In the touch panel as described above, the color tone correction film can be a hard coat layer containing yellow pigment as a color correcting component. With such hard coat layer, the blue color of the conductive polymer material can be effectively weakened.

In the touch panel as described above, an external circuit arrangement can be electrically connected to the fixation side conductive film and the operation side conductive film at one location via a prescribed wiring pattern. Since an external circuit arrangement such as FPC is connected at one location, the construction of the touch panel can be simplified.

The touch panel as described above can be applied to a folding type information apparatus having two folding liquid crystal regions such that the two input operation regions are adhered to the two liquid crystal regions. The touch panel can also be applied to an electronic paper that displays an image by application of a magnetic field or an electric field. Since the touch panel can be formed on two liquid crystal regions of a folding type information apparatus or on an electronic paper, operability of information input to the information apparatus can be improved, and the range of application of the touch panel can be expanded.

### Brief Description of the Drawings

The above and other objects, features and advantages of the present invention will become more apparent from the following description of preferred embodiments with reference to appended drawings, in which:
Fig. 1 is a sectional view of a touch panel according to an embodiment of the present invention;
Fig. 2 is a plan view of the touch panel of Fig. 1 in unfolded flat form;
Fig. 3A is a plan view of the opposing surface of the operation side substrate of the touch panel;
Fig. 3B is a plan view of the opposing surface of the fixation side substrate of the touch panel;
Fig. 4 is a perspective view of an information apparatus having the touch panel shown in Fig. 1 mounted thereon;
Fig. 5 is a perspective view of a test film used in a durability test (bending test);
Fig. 6A is a sectional view of a film having an organic conductive polymer on the underside;
Fig. 6B is a sectional view of a conventional film having an ITO film on the underside;
Fig. 6C is a sectional view of an improved conventional film having an ITO film on the underside;
Fig. 7 is a perspective view of a test film repeatedly bent with one end of a jig for a durability test (bending test) as the bending point;
Fig. 8 is a view for explaining the relation between the corner radius of the end of the jig shown in Fig. 7 and the resistance value measured when the test film is bent in this corner radius;
Fig. 9 is a view for explaining the relation between the number of times of repeated bending and the resistance value measured when the test film was bent repeatedly in the prescribed corner radius at the end of the jig;
Fig. 10 is a sectional view of a variant of the touch panel having a color tone correction film (hard coat layer);
Fig. 11 is a sectional view of another variant of the touch panel having a color tone correction film only on the operation side substrate;
Fig. 12 is a sectional view of another variant of the touch panel having a color tone correction film only on the operation side substrate, and an ITO film as the conductive film on the fixation side substrate;
Fig. 13 is a sectional view of another variant of the touch panel having an ITO film as the conductive film on the operation side substrate; and
Fig. 14 is a plan view of an example of conventional touch panel.

### Detailed Description

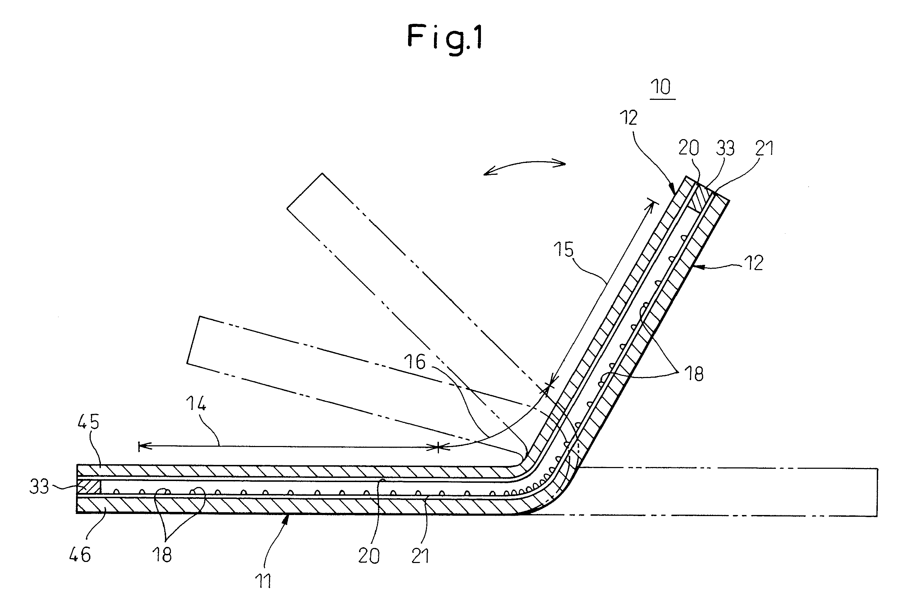

Now, the present invention will be described in detail with reference to drawings showing specific examples of embodiments thereof. Fig. 1 is a view of a touch panel according to an embodiment of the invention.

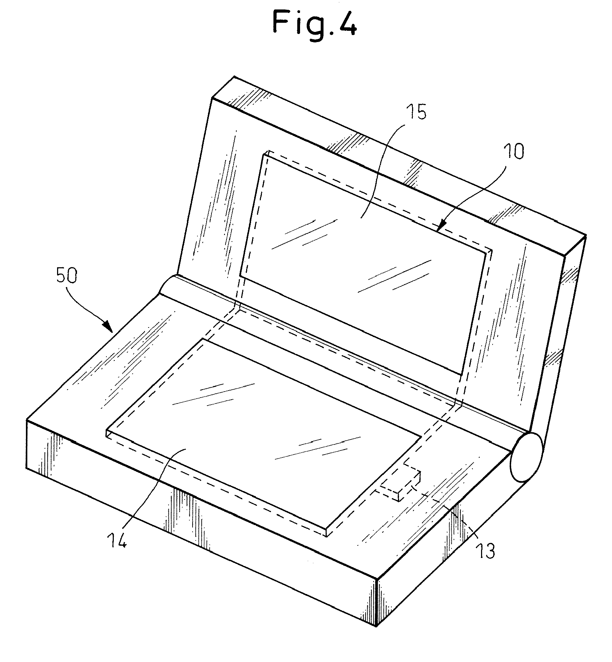

As shown in Fig. 1, a resistive film type touch panel 10 of this embodiment comprises a fixation side substrate (film) 11 that is a lower substrate to be adhered to a liquid crystal screen, an operation side substrate (film) 12 that is a substrate to be pressed by a finger, a pen, or the like, disposed opposite to the fixation side substrate 11, and a FPC connector 13 that electrically interconnects the two substrates 11, 12 to the main body of the apparatus. The touch panel 10 is applied to a folding type information apparatus 50 (Fig. 4) having two liquid crystal screen regions, and is integrally formed in one sheet having two input operation regions 14, 15 and a bending region (bending section) 16 between the two input operation regions 14, 15. Thus, one operation region 15 is adapted to be bent with the bending region 16 as a supporting point.

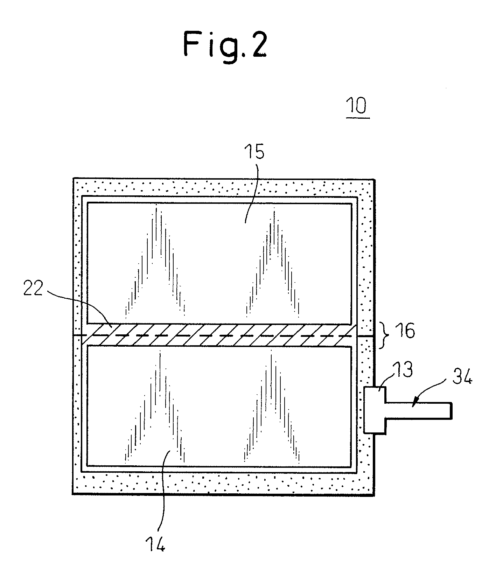

The touch panel 10 of this embodiment will be described in detail below. The two substrates 11, 12 have generally same construction except that dot spacers 18 are formed on the fixation side of substrate 11. The two substrates 11, 12 are adhered to each other with a gap (opposing separation) of about 100µm in the inside of the frame portion. The dot spacers 18 are formed from epoxy resin or the like, and are provided at a prescribed pitch in dimensions of 40µm in diameter and a few µm in height. The pitch between two adjacent dot spacers 18 is wider in the two input operation regions 14, 15 and narrower in the bending region 16. For example, the pitch of dot spacers 18 in the two input operation regions 14, 15 may be 2 mm and the pitch of dot spacers 18 in the bending region 16 may be 1-0.5 mm. By forming the dot spacers 18 in the bending region 16 in narrower pitch, uniformity of the gap between a pair of opposing conductive films (resistive film sheet) 20, 21 can be maintained. Further, as shown in Fig. 2, an insulating film 22 formed in the bending region 16 cooperates with the dot spacers 18 provided in narrower pitch so as to prevent the occurrence of short-circuitting in the bending region 16.

The two substrates 11, 12 have the base material 45, 46 that are formed respectively from biaxially expanded polyethylene terephthalate (PET) of 100-200 µm in thickness, preferably 175 µm in thickness. Various plastics other than PET having suitable flexibility, for example, polyether sulfone (PES), polyether ether ketone (PEEK), polycarbonate(PC), polypropylene(PP), polyamide(PA), etc., can be applied as the base material 45, 46.

On the opposing surfaces of the two substrates 11, 12, a conductive polymer is coated as conductive films 20, 21. The conductive polymer of the present embodiment is a polythiophene based polymer and is highly transparent (translucent). It is generally preferred that the light transmittance of the touch panel be 80% or higher, and for a film thickness of about 500 nm, the light transmittance of the touch panel may be 90% or higher. Other polymer may be used as the conductive polymer as long as it is highly transparent. For example, polyacetylene based polymer, polypyrrole based polymer, or polyphenylene vinylene based polymer or the like may be applied.

There is no particular limitation as regards the film thickness, and the film thickness can be suitably chosen as required for a particular application. For example, the film thickness is preferably 0.01-10 µm, and more preferably 0.1-1 µm. If the film thickness is less than 0.01 µm, resistance of the film may become unstable, and if the film thickness exceeds 10 µm, close adherence to the base material 45, 46 may not be obtained.

There is no particular limitation as regards the surface resistivity (value), and the surface resistivity can be suitably chosen as required for a particular application. For example, the surface resistivity is required to be 5,000 Ω/square or less, and is preferably 3,000 Ω/square or less, and more preferably 1,500 Ω/square or less. If the surface resistivity (value) exceeds 5,000 Ω/square, response characteristics at the time of information input may be degraded. The surface resistivity (value) can be measured in accordance with, for example, JIS K6911, ASTM D257, or the like.

The coating method for coating the conductive polymer is not particularly limited, and can be suitably chosen from any known methods, for example, spin coating, roller coating, bar coating, dip coating, gravure coating, curtain coating, dye coating, spray coating, doctor blade coating, kneader coating, or the like. When a printing method is chosen, there is no particular limitation, and any of the known methods, for example, screen printing, spray printing, ink jet printing, relief printing, intaglio printing, lithographic printing, etc., may be used.

As has been described above, since the substrates 11, 12 are formed using PET having good flexibility as base material 45, 46, and the conductive polymer as the conductive films 20, 21, the touch panel 10 can be bent with the bending region 16 as a supporting point. Durability of the touch panel according to this embodiment with respect to bending is very high, and it has been experimentally confirmed that, after bending is repeated 10000 times with the corner radius of 1.0 mm, no crack is produced and change in electrical resistance is very small (Fig. 9). With a conventional touch panel, on the contrary, the change of electrical resistance is very large even at an early stage of repetitive bending, and it has been found that it cannot withstand repeated bending. When the screen of the touch panel 10 is depressed with a writing implement, stress concentration is relaxed by the elasticity of the conductive polymer, and durability of the touch panel 10 with respect to writing operation is also improved by the elasticity of the conductive film itself. Bending test will be described later.

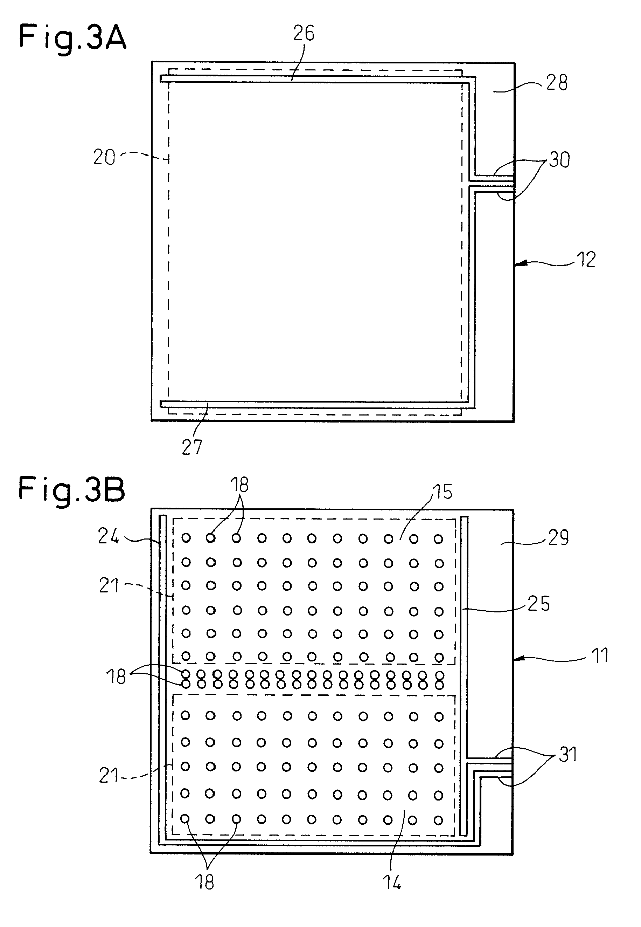

As shown in Figs. 3A and 3B, the frame portion of the two substrates 11, 12 is non-input area as contrasted with the input operation areas of the touch panel 10, and on a pair of the opposing edge of each substrate 11, 12, a pair of electrodes 24, 25, 26, 27 are respectively provided such that, when the two substrates 11, 12 are combined, they form a frame-like shape. Each pair of electrodes 24-27 can be formed from silver and polyester resin. With each pair of electrodes 24-27, upon input by means of a finger or a pen, X-coordinate and Y-coordinate of the input point are detected via the FPC connector 13.

In the portion of the frame of the two substrates 11, 12 where a pair of electrodes 24 ~ 27 are formed, an insulating patterns 28, 29 of epoxy resin, or wiring patterns 30, 31 formed from silver and polyester resin for interconnecting the flexible circuit board to the electrodes, may be formed using an adhesive of acrylic resin.

The substrates 11, 12 are adhered to each other using two-sided adhesive tape 33. Two-sided adhesive tape 33 (Fig. 1) is formed in the shape and dimension corresponding to the frame portion of the substrates 11, 12. The two-sided adhesive tape 33 has adhesive layers on both sides of an insulating plastic film, so that it also acts as an insulating material for the electrodes 24-27 in a form of a frame. The thickness of the two-sided adhesive tape 33 may vary depending upon applications, and the two-sided adhesive tape of, for example 3.0 µm in thickness may be used.

FPC connector 13 shown in Fig. 2 is molded from resin, and is connected to the frame portion around the input operation region 14 by press bonding. The connector 13 consists of a housing and a 4-pole female terminals (not shown). FPC (Flexible printed circuit) 34 for a signal is connected to one end of each terminal, and the wiring pattern formed in the two substrates 11, 12 is connected to the other end of the terminal.

Fig. 4 shows a folding type information apparatus 50 which has two folding liquid crystal regions and has the touch panel 10 of the present embodiment mounted thereon. The two input operation regions 14, 15 of the touch panel 10 are adhered to the two liquid crystal regions of the information apparatus 50. Since input operation is performed in two screens, operability of information input to the information apparatus 50 can be improved, and application to other uses becomes possible.

Next, bending test on the conventional film having ITO film and on the film having organic conductive polymer of the present invention will be described.

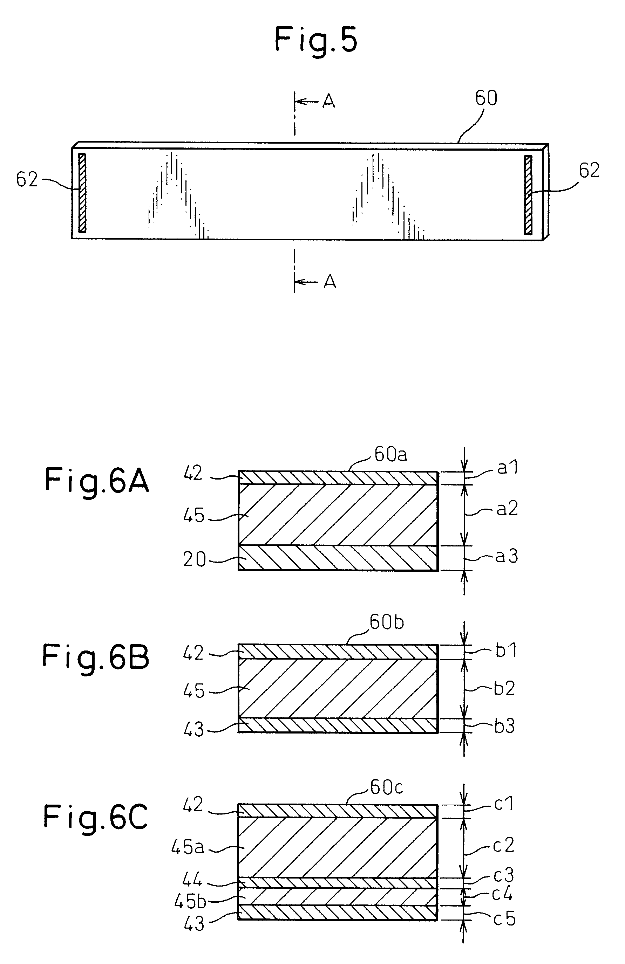

Fig. 5 is a schematic view of the test film 60 used in the bending test. The test film 60 has a prescribed thickness and a prescribed length, and has a pair of electrodes 62, 62 for measuring electrical resistance provided at both longitudinal ends.

Figs. 6A-6C show sectional views taken along line A-A of the test film 60 of Fig. 5. Fig. 6A shows a polymer film 60a of the present invention having an organic conductive polymer 20 on the underside, Fig. 6B shows a conventional ITO film 60b having ITO film 43 on the underside, and Fig. 6C shows an improved conventional ITO film 60c having ITO film 43 on the underside as in Fig. 6B. Individual test films 60a-60c have a laminate structure consisting of a base material 45 formed from PET resin, a hard coat layer 42 coated on the upper surface of the PET resin 45, and a transparent conductive layer 20, 43 coated on the underside of the PET resin 45. In Fig. 6A, thickness a2 of the PET resin 45 is set to 120-200µm, thickness a1 of the hard coat layer 42 is set to 3-4µm, and thickness a3 of the organic conductive polymer 20 is set to 100-200µm. In Fig. 6B, thickness b2 of the PET resin 45 is set to 100-200µm, thickness b1 of the hard coat layer 42 is set to 3-4µm, and thickness b3 of the ITO film 43 is set to 5-10µm. In Fig. 6C, the PET resin 45 has a sandwich structure, in which the PET resin 45a in the upper layer and the PET resin 45b in the lower layer are adhered to each other with soft adhesive 44. By providing the PET resin 45 in two layers, durability of the film 60c with respect to bending is improved. In Fig. 6C, thickness c2 of the PET resin 45 in the upper layer is set to 100-200µm, thickness c3 of the adhesive 44 is set to a few µm, thickness c4 of the PET resin 45 in the lower layer is set to about 25µm, thickness c1 of the hard coat layer 42 is set to 3-4µm, and thickness c5 of the ITO film 43 is set to 5-10µm.

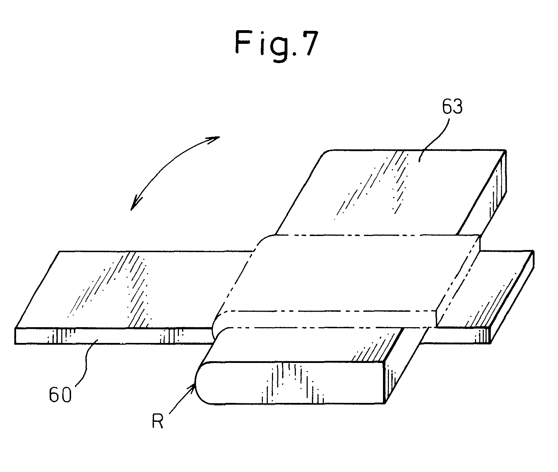

In Fig. 7, repeated bending of the test films 60a-60c using the end of a jig 63 for bending tests as a bending point is shown. In this test, mechanical stress is exerted to the test films 60a-60c by folding and unfolding the test films 60a-60c with the end of a jig 63 as a bending point, and change of electrical resistance between the pair of electrodes 62, 62 in a folded state is examined.

In Fig. 8, the relation between the corner radius R of the end of the jig 63 and the electrical resistance measured when the test films 60a-60c are bent to this corner radius R mm is shown. Conventional ITO film 60b has very poor bending capability, and exhibited change in resistance already at the corner radius R of 8 mm. Improved ITO film 60c showed no change in resistance at the corner radius R of 8 mm, but exhibited change in resistance at the corner radius R of 2 mm, and occurrence of cracks in the bending section was found. On the other hand, the polymer film 60a showed no change in resistance at the corner radius R of 1 mm, and it was found that the bending section flexibly followed the folding and unfolding operation. This property of the polymer film 60a is very advantageous when it is used in a touch panel where mechanical stress is exerted to the film by direct dotting of a point or writing with a pen.

In Fig. 9, the relation between the number of times of repeated bending in which the test films 60a-60c are bent to the corner radius R of 2.0 at the end of the jig 63 and the value of electrical resistance measured when the test films 60a-60c are bent, is shown. The ITO film 60b exhibited change in resistance in the first bending, and produced a large resistance change for further bending. The improved ITO film 60c exhibited no resistance change in the first bending, but began to exhibit resistance change after ten times of repeated bending, and produced a large resistance change for 100 times or more of repeated bending. On the other hand, the polymer film 60a showed no resistance change after 100 times of repeated bending, and slight change in resistance was found only after 10000 times of repeated bending.

Thus, in the polymer film 60a, the organic conductive film 20 has the flexibility characteristic of polymer material, and it has been found that the polymer material has good compatibility with the PET base material 45, and inconveniences such as degradation of electrical conductivity due to destruction of the structure is unlikely to occur after repeated bending. On the contrary, conventional ITO films 60b, 60c, in which ITO film 43 is coated by sputtering in vacuum, and thus, a thin and fragile ceramic film is formed on the PET base material 45, has been found to have poor durability with respect to bending.

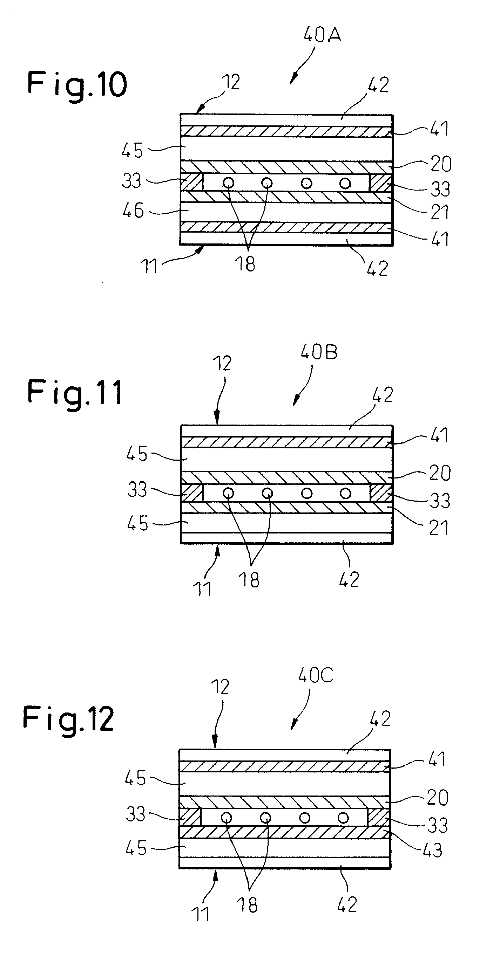

Next, variants of the touch panel will be described with reference to Figs. 10-13. In the drawings, dimension in thickness direction is exaggerated in order to facilitate understanding of the construction. In Figs. 10-12, touch panels 40A-40C having a color tone correction film 41 for correcting the blue color of the conductive polymer are shown. The color tone correction film 41 is formed on the outermost layer of the substrate 11, 12 as a hard coat layer 42 containing a yellow pigment. The yellow pigment may be, for example, nickel-yellow, or azo-based yellow pigment. The hard coat layer 42 is usually formed in a thickness of a few µm in order to increase surface hardness or abrasion resistance of the substrate 11, 12. The color tone correction film 41 of the present invention is a hard coat layer 42 with color tone correcting function added thereto.

In Fig. 10, an embodiment of the present invention in which color tone correction films 41 are provided both on the fixation side substrate 11 and on the operation side substrate 12 is shown. On each substrate 11, 12, the hard coat layer 41, 42 consist of two layers, that is, upper and lower layers, the lower layer functioning as a color tone correction film 41 and the upper layer being ordinary hard coat layer 42 having no color correction function. The blue tone of the touch panel 40A is weakened by the color tone correction film 41, so that discomfort to those people accustomed to yellowish hue of a touch panel can be reduced and the quality of the touch panel can be improved.

In Fig. 11, an embodiment in which a color tone correction film 41 is provided only on the operation side substrate 12 is shown. On the operation side substrate 12, the hard coat layer 41, 42 consist of two layers, that is, upper and lower layers, the lower layer functioning as a color tone correction film 41 and the upper layer being ordinary hard coat layer 42 having no color correction function, as in Fig. 10. It has been confirmed that the color tone correction film 41 provided only on the operation side substrate 12 is also effective.

In Fig. 12, a touch panel 40C is shown in which the color tone correction film 41 is provided only on the operation side substrate 12 as in Fig. 11, the conductive film on the fixation side substrate 11 being an ITO film 43 and the conductive film on the operation side substrate 12 being conductive polymer. In this touch panel 40C, by removing ITO film in the bending region 16 on the fixation side substrate 11, the touch panel 40C can be bent with the bending region 16 as a supporting point. In this variant, thanks to the conductive polymer coated on the operation side substrate 12, writing durability of the touch panel 40C is not impaired.

In Fig. 13, a touch panel 40D having no color tone correction film is shown. In this touch panel 40D, conductive polymer is formed on the fixation substrate 11, and an ITO film 43 is formed on the operation side substrate 12. Thus, unlike the touch panels 10, 40A, 40B, 40C as described above, this touch panel 40D cannot be bent with the bending region 16 as a supporting point. This touch panel 40D is advantageous in that, since the ITO film 43 on the fixation side substrate 11 is replaced by a conductive polymer, durability of the touch panel 40D can be improved, and at the same time, the yellowish hue of the ITO film 43 can be used to correct the blue color of the conductive polymer.

As has been described above, with the touch panel of the present embodiment, the bending region 16 which defines the two input operation region 14, 15 can be bent freely, so that, when the touch panel is repeatedly bent with the bending region 16 as a supporting point in the direction such that one end of the touch panel moves towards or away from the other end of the touch panel, stress concentration in the bending region 16 can be prevented. Therefore, it is possible to provide a touch panel capable of being bent repeatedly and having high durability and excellent reliability of electrical connection.

The present invention is by no means limited to above-described embodiment, but can be implemented in various modifications without departing from the scope of the invention. Although, in the present embodiment, PET 45, 46 is applied to the substrates 11, 12, it is also possible to use, for example, soda lime glass of 0.7-1.8 mm in thickness as the base material of the fixation side substrate 11. In this case, by separating the portion corresponding to the bending region 16 of the base material in two parts, it is possible to increase the strength of the touch panel without impairing the bending capability of the touch panel.

## Claims

1. A touch panel comprising a fixation side substrate and an operation side substrate disposed in opposition and adhered to each other, having a fixation side conductive film and an operation side conductive film respectively formed on opposing faces of said fixation side substrate and said operation side substrate, and being capable of detecting any contact point on the fixation side conductive film and the operation side conductive film as a 2-dimensional coordinate,
wherein a bending section capable of being bent is formed between one end and the other end thereof, and wherein two input operation regions are defined and formed on both sides of the bending section.

2. A touch panel according to claim 1,
wherein said fixation side conductive film and said operation side conductive film are conductive polymer.

3. A touch panel according to claim 1,
wherein said fixation side conductive film is an ITO film and said operation side conductive film is a conductive polymer, and wherein the portion of said fixation side conductive film corresponding to said bending section has been removed.

4. A touch panel according to claim 2,
wherein said fixation side substrate is glass and is separated into two parts at the portion corresponding to said bending section, and wherein said operation side substrate is integrally formed from a transparent film in one unit.

5. A touch panel according to any of claims 1 to 4,
wherein an insulating layer is formed in said bending section.

6. A touch panel according to claim 5,
wherein a multiplicity of dot spacers are formed in said bending section with narrower separation than dot spacers formed in said two input operation regions.

7. A touch panel according to at least claim 2,
wherein a color tone correction film for correcting blue color of said conductive polymer is coated at least on said operation side substrate.

8. A touch panel according to claim 7,
wherein said color tone correction film is a hard coat layer containing yellow pigment as a color tone correcting component.

9. A touch panel according to claim 1,
wherein an external circuit arrangement connected at one location is connected via a prescribed wiring pattern to said fixation side conductive film and said operation side conductive film.

10. A touch panel according to any of the preceding claims,
wherein said touch panel is applied to a folding type information apparatus having two liquid crystal regions, such that said two input operation regions are adhered to said two liquid crystal regions.

11. A touch panel according to any of the preceding claims,
wherein said touch panel is adhered to an electronic paper that displays an image upon application of magnetic field or electric field.
